(19) **Europäisches Patentamt**
**European Patent Office**
**Office européen des brevets**

(11) **EP 1 949 036 B2**

(12) **NOUVEAU FASCICULE DE BREVET EUROPEEN**
Après la procédure d'opposition

(45) Date de publication et mention de la décision concernant l'opposition:
**03.01.2018 Bulletin 2018/01**

(45) Mention de la délivrance du brevet:
**10.09.2014 Bulletin 2014/37**

(21) Numéro de dépôt: 06831123.2

(22) Date de dépôt: **15.11.2006**

(51) Int Cl.:
***G01D 5/14*** *(2006.01)*

(86) Numéro de dépôt international:
**PCT/FR2006/002526**

(87) Numéro de publication internationale:
**WO 2007/057563 (24.05.2007 Gazette 2007/21)**

(54) **CAPTEUR DE POSITION ANGULAIRE MAGNETIQUE POUR UNE COURSE ALLANT JUSQU'A 360°**

MAGNETISCHER WINKELPOSITIONSSENSOR FÜR EINE UMDREHUNG BIS 360°

MAGNETIC ANGULAR POSITION SENSOR FOR A COURSE UP TO 360°

(84) Etats contractants désignés:
**CH DE ES FR GB IT LI**

(30) Priorité: **15.11.2005 FR 0511567**
**03.04.2006 FR 0651174**

(43) Date de publication de la demande:
**30.07.2008 Bulletin 2008/31**

(60) Demande divisionnaire:
**14176789.7 / 2 793 001**

(73) Titulaire: **MMT SA**
**6304 Zug (CH)**

(72) Inventeurs:
• **JERANCE, Nikola**
**F-25000 Besancon (FR)**
• **FRACHON, Didier**
**F-25000 Besancon (FR)**

(74) Mandataire: **IP Trust**
**2, rue de Clichy**
**75009 Paris (FR)**

(56) Documents cités:
**EP-A- 1 365 208        EP-A- 1 571 424**
**EP-A1- 1 014 039       EP-A2- 1 182 461**
**WO-A1-2004/013645      DE-A1- 19 543 562**
**DE-A1- 19 737 999      US-A1- 2005 253 578**
**US-B1- 6 326 781**

• **MELEXIS: 'MLX90316 Rotary Position Sensor IC' INTERNET CITATION, [en ligne] 20 Septembre 2005, XP055056360 Extrait de l'Internet: <URL:http://www.yeint.ru/suppliers/melexis/pdf/MLX90316_Rev001.pdf> [extrait le 2013-03-13]**

**EP 1 949 036 B2**

## Description

La présente invention concerne le domaine des capteurs de position rotatifs magnétiques pour des angles pouvant aller jusqu'à 360°, et plus particulièrement les capteurs de position destinés à la mesure de la position angulaire d'une colonne de direction pour automobile, sans que cette application ne soit exclusive.

Les capteurs qui détectent l'angle à partir d'un champ magnétique ont de nombreux avantages :

- pas de contact mécanique avec le partie mobile, et donc pas d'usure,
- insensibilité à la saleté,
- coût de production réduit,
- longue durée de vie.

On connaît dans l'état de la technique les documents de brevet n° EP 1 014 039 et EP1083406 décrivant un capteur rotatif, présentant un aimant bague et deux éléments magnétosensibles, qui mesurent la composante radiale du champ généré par l'aimant et qui conduit à deux signaux sinusoïdaux en quadrature qui servent après décodage à détecter la position sur 360 degrés.

L'inconvénient de cette solution est la présence de deux sondes, ce qui peut induire une erreur de mesure due au mauvais placement d'une sonde par rapport à l'autre. Également, la présence de deux circuits intégrés décalés spatialement de 90° augmente le coût final du capteur, car la surface de circuit imprimé peut être importante et le nombre de connexions est augmenté.

On connaît par ailleurs dans l'état de la technique des sondes permettant de mesurer les deux composantes du champ magnétique dans un plan (sonde à effet Hall, par exemple MLX90316 de Melexis, ou sondes magnétorésistives).

On connaît également dans l'état de la technique la demande de brevet EP 1 182 461 qui décrit un capteur de position angulaire comprenant un aimant permanent cylindrique mobile et une sonde de détection mesurant deux composantes du champ magnétique.

On connaît également dans l'état de la technique à demande de brevet EP 1 571 424 qui décrit l'utilisation d'un aimant de forme elliptique à des fins de correction de la non-linéarité du signal.

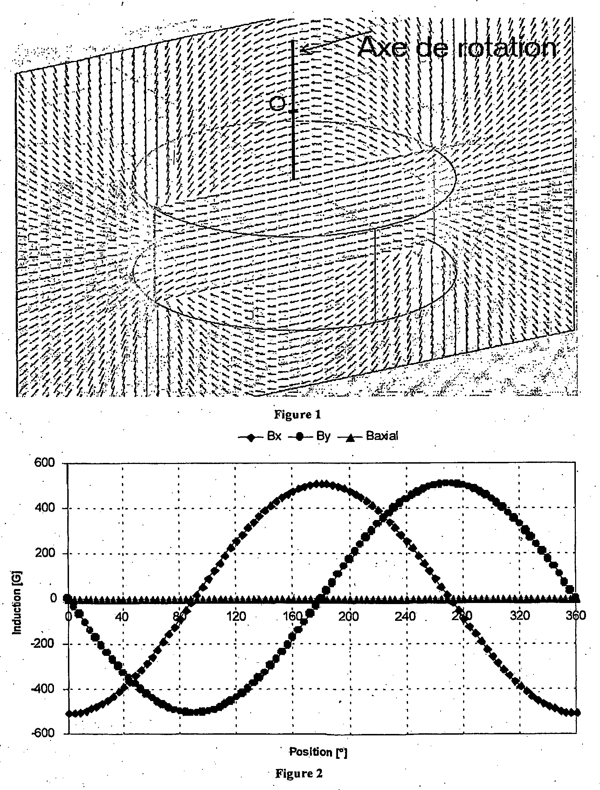

On connaît ainsi également dans l'état de la technique le brevet US06316935 qui décrit un capteur de position rotative sur 360° et qui utilise une sonde magnétorésistive afin de déterminer la position angulaire d'un aimant disque aimanté sensiblement diamétralement (voir figure 1). Dans ce brevet la sonde magnétorésistive sensible à la direction du champ magnétique généré par l'aimant est placée sous l'aimant et sensiblement sur son axe de rotation. La sonde mesure les composantes Bx et By du champ magnétique sur l'axe de rotation de l'aimant (voir figure 2). Une telle disposition de l'aimant et de la sonde limite l'utilisation d'un tel capteur. En effet, dans le cas de l'application particulière d'un capteur rotatif pour mesurer la position angulaire d'un système à arbre traversant comme par exemple une colonne de direction, une telle disposition de l'aimant et de la sonde n'est pas possible de part le fait que l'encombrement de la colonne de direction interdit de positionner l'élément magnétosensible sur son axe de rotation.

On connaît aussi le brevet européen EP1014039 décrivant, dans l'exemple 3, un capteur comprend un aimant linéaire anisotrope circulaire aimanté diamétralement, ainsi que deux sondes positionnées au même point. Cette solution de l'art antérieur nécessite un aimant anisotrope pour fournir un signal linéaire.

On connaît aussi le document EP1014039 et le brevet japonais JPS58162813

La présente invention se propose de résoudre les problèmes mentionnés ci-dessus en permettant d'utiliser deux composantes du champ magnétique (radiale et tangentielle ou axiale et tangentielle) mesurées sensiblement en un seul point (physiquement, nous considérons que les mesures sont faites en un point, si la distance entre les points de mesure des deux composantes du champ magnétique est inférieure à 5 mm) hors de l'axe de rotation d'un aimant bague ou disque aimanté diamétralement, de manière à connaître sa position angulaire même si cet angle ne correspond pas à l'angle du champ magnétique (Rappel : la direction du champ magnétique n'est « alignée » avec la position angulaire de l'aimant que si la mesure est effectuée sur l'axe de ce même aimant). La solution ci-après décrite permet ainsi de diminuer le coût du capteur et d'augmenter la fiabilité des mesures tout en l'adaptant avantageusement à différentes configurations géométriques, notamment dans le cas d'un dispositif à axe traversant.

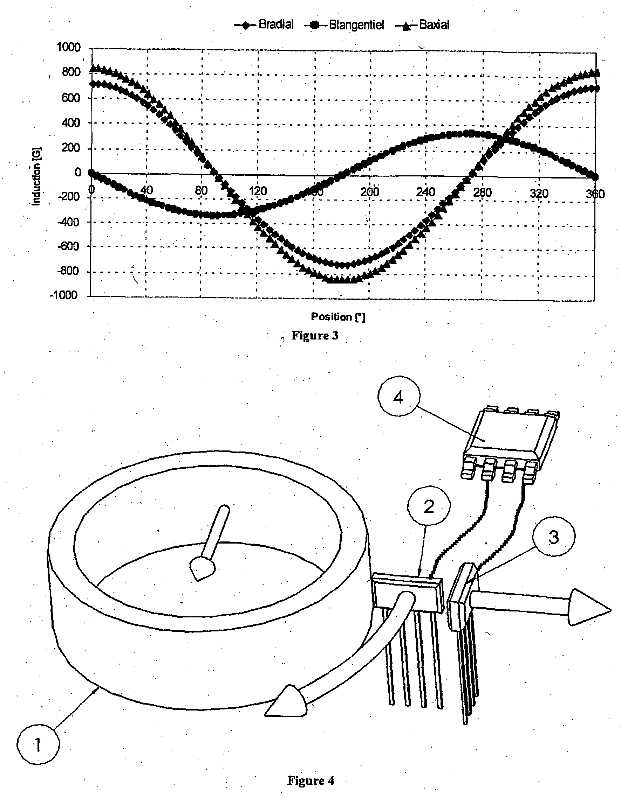

Si nous considérons n'importe quel point de l'espace autour d'un aimant bague ou disque aimanté diamétralement, la composante radiale et la composante axiale du champ magnétique, généré par cet aimant, sont deux sinusoïdes qui sont en phase alors que la composante tangentielle est une sinusoïde déphasée de 90 degrés par rapport aux deux autres composantes du champ magnétique (voir figure 3). Il est donc possible d'utiliser un couple de composantes du champ magnétique déphasées de 90 degrés (tangentielle et radiale ou tangentielle et axiale) pour décoder l'angle de l'aimant, en utilisant la formule suivante :

$$\alpha(t) = \arctan\left(\frac{V_{1\max}}{V_{2\max}}\frac{V_2(t)}{V_1(t)}\right)$$

où :

  $\alpha$ - angle de rotation

  $V_1$ - composante radiale ou axiale du champ magné-

tique $V_{1max}$ - amplitude de $V_1$
$V_2$ - composante tangentielle du champ magnétique
$V_{2max}$ - amplitude de $V_2$

Le décodage de la position angulaire de l'aimant à partir de ces deux composantes dont les amplitudes sont en général différentes nécessite de normaliser les deux composantes utilisées pour pouvoir faire le calcul de l'arctangente pour en déduire l'angle. Ces fonctions de décodage et de normalisation sont réalisées soit par un élément séparé (4) ou directement par une sonde (ex. MLX 90316) intégrant la mesure des deux composantes du champ, le décodage de l'angle et la normalisation des deux composantes du champ.

L'avantage économique est alors d'utiliser un seul circuit intégré de type SMD (Surface Mount Device) avec une surface de circuit imprimé beaucoup plus faible que si on utilisait deux sondes positionnées à 90° autour de l'aimant.

L'invention concerne selon acceptation la plus générale un capteur de position angulaire selon la revendication 1.
D'autres modes de réalisation font l'objet des revendications suivantes.

Dans un mode de réalisation préféré, les éléments magnétosensibles sont constitués par au moins une paire de capteurs magnétosensibles dont les axes de sensibilité sont parallèles, lesdits capteurs d'une paire étant couplés magnétiquement par une culasse ferromagnétique perpendiculaire auxdits axes de sensibilité, ladite culasse étant disposée dans un plan perpendiculaire à l'axe de rotation ou dans un plan parallèle à un plan passant par l'axe de rotation. À titre d'exemple, les éléments magnétosensibles sont constitués par une sonde à concentrateur de flux intégré MLX90316 produite par Melexis, qui comprend quatre capteurs coplanaires (dont les axes de sensibilité sont de ce fait parallèles). Ces quatre éléments de Hall sont placés sous les bords d'un disque ferromagnétique constituant une culasse. Ils sont espacés de 90°. Le champ magnétique se courbe à proximité du disque ferromagnétique (qui a une perméabilité relative importante). Les lignes de champ magnétique sont perpendiculaires à la surface du concentrateur de flux magnétique et elles passent par les éléments de Hall, permettant ainsi de mesurer les deux composantes de champ magnétique dans le plan de la sonde. En plus, le champ magnétique mesuré par les éléments de Hall est amplifié, parce que les lignes de champ sont concentrées à proximité du disque ferromagnétique. Les éléments de Hall sur chaque axe (X et Y ou X et Z) sont reliés à un circuit de traitement de signal qui délivre la différence de tensions des deux éléments de Hall (ce qui élimine la composante axiale du champ magnétique), qui est amplifiée et échantillonnée par un convertisseur analogique/numérique. Le circuit de traitement de signal numérique multiplie chaque composante par un gain programmable (ce qui permet d'obtenir de sinusoïdes dont l'amplitude est sensiblement la même) et effectue les différentes compensations (d'offset, d'orthogonalité, de variation des paramètres de la sonde en température) avant de faire la division et le calcul d'arctangente. L'angle obtenu est disponible à la sortie du circuit intégré, par exemple sous la forme d'une tension proportionnelle à cet angle.

Cette invention utilise des aimants isotropes le processus d'aimantation pour obtenir une « bonne » aimantation diamétrale de l'aimant est complexe. En effet, le champ d'aimantation nécessaire pour aimanter diamétralement un aimant bague est aisément obtenu avec une simple bobine parcourue par un courant, mais de par la différence de perméabilité magnétique entre l'air et le matériau à aimanter il se produit une courbure des lignes de champ, courbure qui suit la relation de réfraction à la frontière entre deux milieux suivante :

$$\frac{\tan(\alpha_1)}{\tan(\alpha_2)} = \frac{\mu_{r1}}{\mu_{r2}}$$

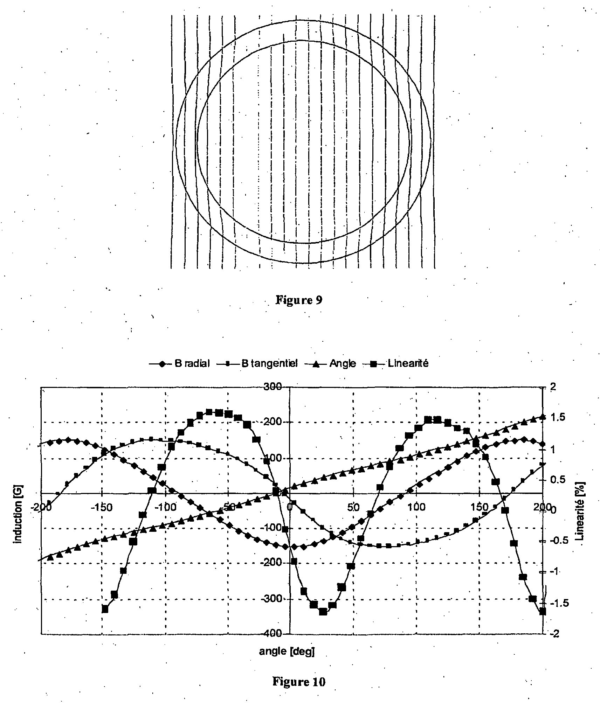

Cette courbure se traduit par une aimantation du matériau qui n'est pas diamétrale et donc par une distorsion des deux composantes mesurées, telle qu'elles sont représentées en figure 10. Ces deux signaux ne sont pas deux sinusoïdes déphasées de 90° ce qui se traduit lors du décodage par une très forte non linéarité comme nous pouvons le constater sur cette même figure 10 qui montre le signal décodé à partir des deux composantes du champ magnétique.

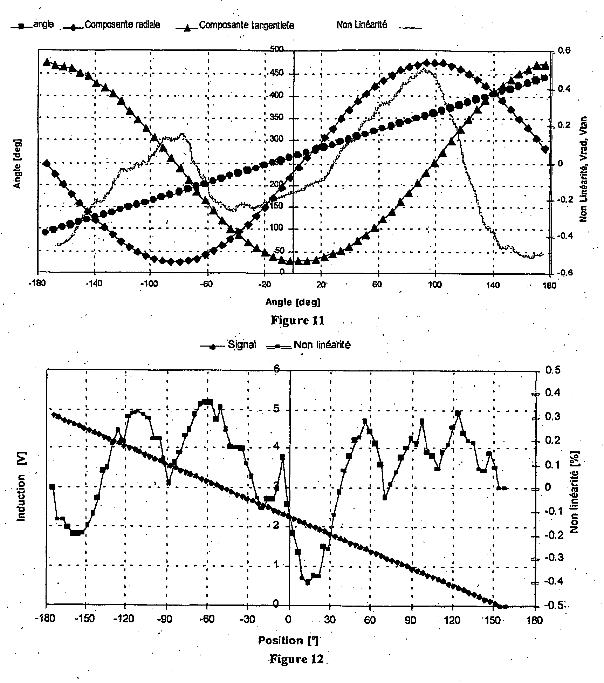

Dans le cas d'un matériau isotrope, pour corriger et compenser cette courbure des lignes de champ à l'intérieur de l'aimant qui conduit à une « mauvaise » aimantation diamétrale la forme extérieure de l'aimant au lieu d'être circulaire sera avantageusement choisie sous une forme sensiblement elliptique (voir figure 11).

Il est également possible dans le cas de l'utilisation de la sonde MLX 90316 de programmer cette sonde de telle façon à compenser en partie l'erreur de non linéarité. (Cette possibilité ne fait pas partie de l'invention).
La compensation se fait par l'intermédiaire d'une programmation de gains différents sur toute la course du capteur. Dans le cas d'une telle programmation, nous donnons sur la figure 12

• le signal décodé par une fonction de transfert non linéaire ;
• la non linéarité du signal décodé.

Dans le cas où l'application requiert une redondance des signaux de sortie, on peut bien évidemment envisager de doubler le système, en utilisant un second point de mesure décalé angulairement du premier par rapport à l'axe de rotation. De manière préférentielle, on pourra donc avoir deux boîtiers similaires intégrant chacun la mesure et le décodage de deux signaux, l'un tangentiel, l'autre issu de la combinaison de composantes radiale et axiale, avec un ajustement de gain spécifique, de manière à délivrer deux signaux de position angulaire indépendants.

Dans le cas d'une application telle que la mesure de position d'une colonne de direction associée à un volant effectuant une rotation sur plusieurs tours, il peut s'avérer nécessaire de mesurer une course supérieure à 360°.

Il est alors possible d'utiliser le capteur selon l'invention en l'associant à une réduction du mouvement afin de ramener la rotation sur plusieurs tours à une rotation inférieure ou égale à un tour au niveau du capteur.

L'invention sera mieux comprise à la vue des différentes figures.

- La figure 1 montre les lignes de champ générées par un aimant disque aimanté diamétralement,
- La figure 2 représente les 3 composantes de l'induction magnétique en un point situé sur l'axe de rotation de l'aimant - point O représenté sur la figure 1,
- La figure 3 représente les 3 composantes de l'induction magnétique en un point situé hors de l'axe de rotation de l'aimant,
- Sur la figure 4 nous donnons une vue générale de la présente invention,
- Sur la figure 5, nous avons représenté une vue d'un capteur rotatif utilisant les composantes radiale et tangentielle de l'induction,
- Sur la figure 6 nous donnons les 3 composantes de l'induction magnétique en un point quelconque de l'espace pour la configuration décrite à la figure 5 (point de mesure sur le plan moyen de l'aimant),
- Sur la figure 7, nous avons représenté une vue d'un capteur rotatif utilisant les composantes axiale et tangentielle de l'induction,
- La figure 8 montre les lignes de champ à l'intérieur de l'aimant lors de l'aimantation pour un matériau avec une perméabilité relative ($\mu$r) égale à 1,
- La figure 9 montre les lignes de champ à l'intérieur de l'aimant lors de l'aimantation pour un matériau avec une perméabilité relative ($\mu$r) égale à 1.2,
- La figure 10 montre les composantes radiale et tangentielle de l'induction magnétique ainsi que la non linéarité du signal mesurées sur un aimant bague circulaire isotrope aimanté « diamétralement »,
- La figure 11 montre les composantes radiale et tangentielle de l'induction magnétique ainsi que la non linéarité du signal mesurées sur un aimant isotrope ayant une forme extérieure sensiblement elliptique aimanté « diamétralement »,
- La figure 12 donne le signal obtenu sur un aimant isotrope et décodé avec une fonction de transfert non linéaire, qui ne fait pas partie de l'invention ;
- La figure 13 montre un aimant avec une aimantation radiale graduelle, qui ne fait pas partie de l'invention
- La figure 14 montre les 3 composantes de l'induction magnétique en un point quelconque de l'espace autour de l'aimant, qui ne fait pas partie de l'invention
- La figure 15 montre l'intégration du capteur selon la présente invention intégrée à un réducteur pour être utilisé sur une application multi tour,
- La figure 16 représente les quatre éléments de Hall placés sur le bord d'un concentrateur de flux magnétique,
- La figure 17 représente les lignes de champ magnétique en présence du concentrateur de flux,
- La figure 18 représente le schéma bloc du traitement de signal d'une sonde utilisant quatre éléments de Hall et un concentrateur de flux magnétique,
- Les figures 19 et 20 montre un mode de réalisation secondaire où l'aimant est une tuile, mode qui ne fait pas partie de l'invention.
- La figure 21 montre un mode de réalisation secondaire suivant l'invention où la sonde comprenant les éléments magnétosensibles est située à l'intérieur de l'aimant cylindrique creux,
- Les figures 22, 23 et 26 montrent des modes de réalisation secondaires suivant l'invention où la sonde est associée à un blindage aux champs magnétiques extérieurs,
- Les figures 24 et 25 montre un mode de réalisation secondaire suivant l'invention où le capteur est associé à un roulement.

Sur la figure 1 sont montrées les lignes de champ typiques obtenues avec un aimant disque aimanté diamétralement. Les lignes de champ sont représentées sur un plan passant par le centre de l'aimant et colinéaire avec la direction d'aimantation de l'aimant. Sur les figure 2 et figure 3, les composantes radiale (Bx), tangentielle (By) et axiale (Baxial) de l'induction magnétique sont tracées respectivement pour un point de mesure situé sur l'axe de rotation de l'aimant et en un point situé sur un rayon supérieur au rayon extérieur de l'aimant. La figure 2 montre que les composantes X et Y de l'induction magnétique sur un point de l'axe en fonction de la rotation de l'aimant sont de même amplitude et que la composante axiale est nulle cela quelle que soit la position au-dessus de l'aimant. En ce qui concerne la figure 3, on remarque que les 3 composantes de l'induction magnétique sont différentes de 0 et que les composantes radiale et axiale sont en phase alors que la composante tangentielle est déphasée de 90° par rapport aux deux autres.

La figure 4 représente le capteur selon la présente invention sur laquelle nous avons un aimant permanent bague aimanté sensiblement radialement (1), cet aimant génère en m'importe quel point de l'espace un champ magnétique dont les composantes radiales ou axiales (3) et tangentielle (2) sont mesurées par deux éléments magnétosensibles dont les signaux sont ensuite traités par un élément de traitement (4) qui réalise le décodage ainsi que la normalisation des deux composantes afin de sortir un signal électrique proportionnel à la position angulaire de l'aimant.

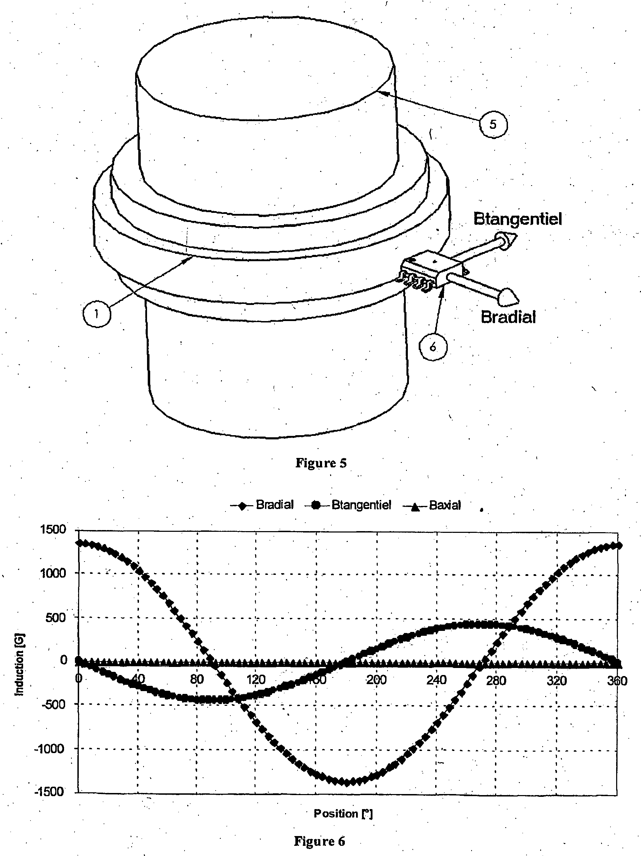

La figure 5 représente la configuration du capteur, pour une application de capteur de colonne de direction, utilisant les composantes radiale et tangentielle du champ magnétique généré par l'aimant (1). Cette configuration utilise un aimant bague aimanté diamétralement monté directement sur l'axe de la colonne de direction ou de l'axe d'entraînement (5). Le plan de la sonde sera avantageusement placé de façon coplanaire avec le plan de symétrie de l'aimant afin de limiter l'influence de la composante axiale du champ magnétique dans le cas d'une erreur de positionnement de la sonde (6). En effet, pour cette configuration particulière la composante axiale du champ magnétique est nulle et donc même si la sonde n'est pas parfaitement positionnée la projection de la composante axiale sur la composante tangentielle mesurée par la sonde sera nulle. Dans cette configuration particulière, nous utilisons une sonde intégrant la mesure des deux composantes du champ, la normalisation des deux composantes et le décodage de l'angle à partir des deux signaux déphasés de 90°. Selon une variante préférentielle l'aimant sera directement collé sur la colonne.

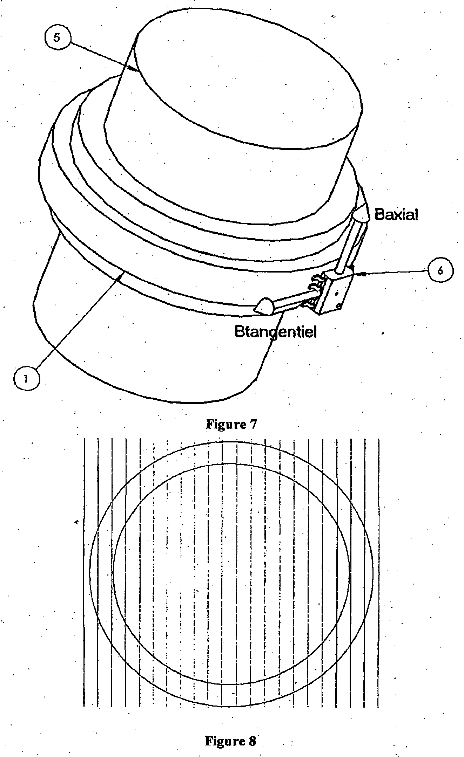

La figure 7 représente une configuration de capteur, pour une application de capteur de colonne de direction, utilisant les composantes axiale et tangentielle de l'induction magnétique générée par l'aimant (1). Pour cette configuration, il n'existe pas de position de la sonde qui conduise à annuler de façon évidente la composante radiale qui dans le cas d'un mauvais positionnement de la sonde (4) induit une contribution sur la composante tangentielle pouvant provoquer une distorsion du signal de sortie. Pour une telle configuration, la position de la sonde sera donc avantageusement choisie afin de réduire au minimum la composante radiale tout en gardant une amplitude optimale sur les deux autres composantes. Dans cette configuration particulière, nous utilisons une sonde intégrant la mesure des deux composantes du champ, la normalisation des deux composantes et le décodage de l'angle à partir des deux signaux déphasés de 90°.

La figure 8 montre les lignes de champ, lors de l'aimantation en vue d'obtenir une aimantation diamétrale, à l'intérieur et à l'extérieur d'un aimant bague avec une perméabilité relative égale à 1 ($\mu$r = 1 comme celui de l'air). Les lignes de champ traversent l'aimant sans subir aucune déformation ce qui permet une aimantation diamétrale parfaite.

La figure 9 montre les lignes de champ, lors de l'aimantation, à l'intérieur et à l'extérieur d'un aimant bague avec une perméabilité relative égale à 1.2. Les lignes de champ subissent une déformation lors de la traversée de l'aimant, déformation due à la différence de perméabilité relative entre l'air ($\mu$r = 1) et l'aimant ($\mu$r = 1.2 dans le cas présent). Cette déviation des lignes de champ se traduit donc par une mauvaise aimantation diamétrale de l'aimant. Pour résoudre ce problème il est bien sûr possible d'utiliser un aimant anisotrope ayant une direction d'aimantation préférentielle. Dans le cas d'un aimant isotrope, il sera difficile d'obtenir une bonne aimantation diamétrale, qui conduira aux résultats donnés en figure 10. Pour corriger et compenser cette erreur d'aimantation, un aimant de forme extérieure sensiblement elliptique peut être utilisé. Les composantes de l'induction mesurées sur un tel aimant sont données en figure 11. Nous constatons une très nette amélioration de la non-linéarité due à la différence de réfraction des lignes de champ ainsi que la variation d'entrefer de mesure.

Dans le cas d'un aimant bague isotrope aimanté avec une mauvaise aimantation diamétrale due à la réfraction des lignes de champ à la surface de l'aimant lors du processus d'aimantation, il est possible dans le cas de l'utilisation de sonde programmable de programmer une fonction de transfert non linéaire permettant de compenser en partie la non linéarité du signal (voir figure 12).

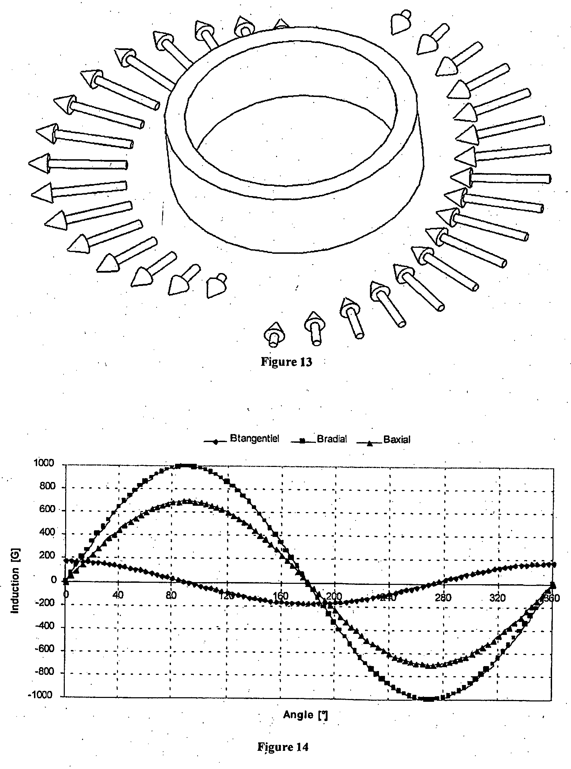

Dans le cas d'un aimant isotrope ou ayant une anisotropie radiale, sur la figure 13 nous avons représenté un aimant bague avec une variation sinusoïdale de l'aimantation rémanente sur 1 tour. Une telle configuration conduit aux signaux de la figure 14.

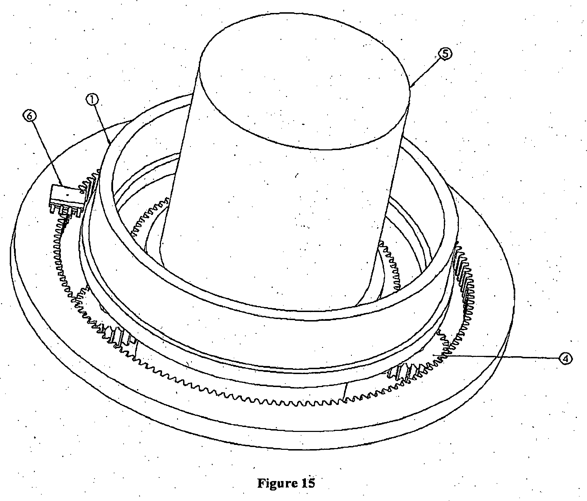

La figure 15 représente le capteur suivant la présente invention intégré avec un aimant bague intégré à la sortie d'un réducteur de manière à mesurer une course supérieure à 360° d'un élément situé en entrée du réducteur. Ceci peut par exemple être mis en oeuvre dans le cas d'une colonne de direction qui nécessite la détection de la position angulaire du volant sur plusieurs tours. L'exemple de la figure 15 montre le capteur associé à un réducteur planétaire, mais tout autre de système de réduction est utilisable tant que l'intégration est compatible avec l'application.

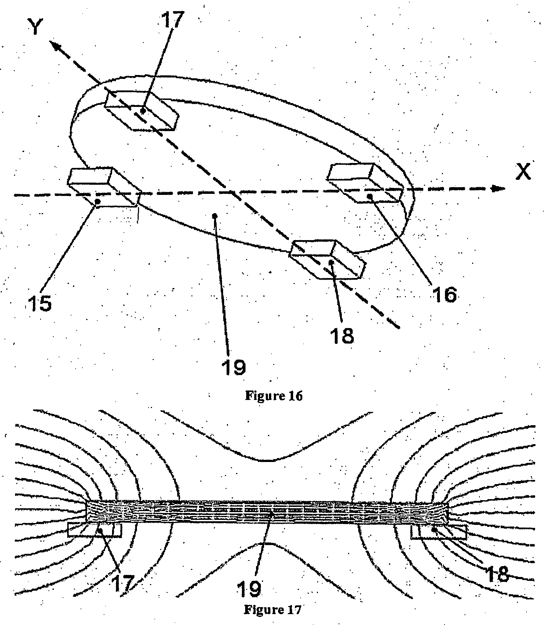

La figure 16 représente le concentrateur de flux (19) et les quatre éléments de Hall (15, 16, 17 et 18) placés sous le bord de l'élément 19 et espacés de 90°. Chacun des éléments de Hall (15, 16, 17 et 18) présente un axe de détection orienté selon l'axe Z perpendiculaire au plan XOY du concentrateur de flux (19). Les éléments 15 et 16 mesurent l'induction magnétique suivant l'axe X et les éléments 17 et 18 mesurent l'induction magnétique suivant l'axe Y. Les quatre éléments (15, 16, 17 et 18) et la culasse (19) de concentration de flux (19) sont montés dans un boîtier assurant une encapsulation de l'ensemble pour former un composant unique.

La figure 17 montre les lignes de champ magnétique en présence d'un concentrateur de flux magnétique (19), dans une coupe verticale suivant l'un des axes X et Y. Les lignes de champ se courbent et deviennent perpendiculaires à la surface du concentrateur de flux, passant par les éléments de Hall (17) et (18).

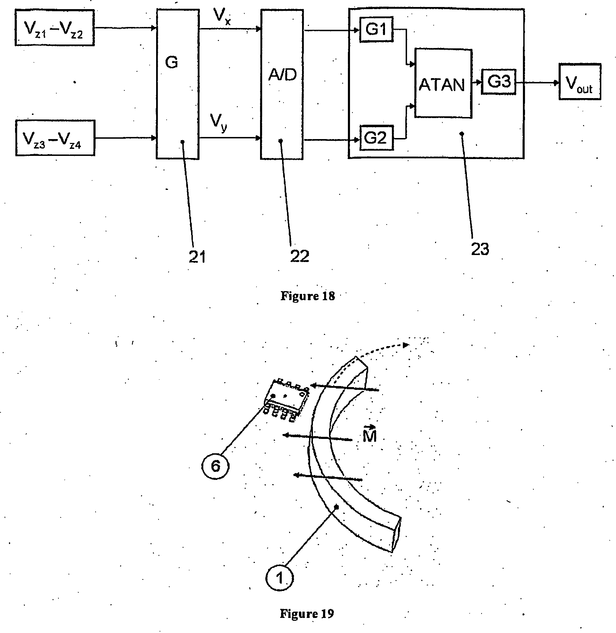

La figure 18 représente un schéma bloc du traitement de signal. Les signaux $V_x$ et $V_y$ sont obtenus à partir des éléments de Hall 15 (qui délivre le signal $V_{z1}$), 16 (qui délivre le signal $V_{z2}$) et 17 (qui délivre le signal $V_{z3}$), 18 (qui délivre le signal $V_{z4}$). Les différences sont amplifiées par le gain (21) (y compris le gain électronique et le gain dû au concentrateur ferromagnétique 19), ils passent par le convertisseur analogique/numérique (22) et ils arrivent au bloc de traitement de signal numérique (23): la correction des amplitudes mesurées est effectuée par ce bloc qui délivre le signal de sortie ($V_{out}$).

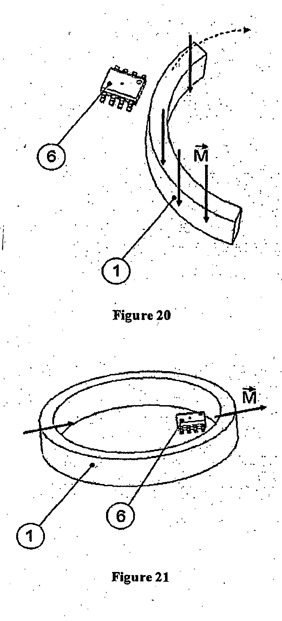

Sur les figures 19 et 20, l'aimant (1) est une tuile cylindrique qui présente bien une aimantation diamétrale. Cette orientation diamétrale peut décrire un nombre infini de direction relativement à la tuile (1). Les figures 19 et 20 sont deux exemples de direction que peut prendre cette aimantation. Sur la figure 19, l'aimantation est radiale au milieu de l'aimant (1) alors qu'elle est tangentielle sur la figure 20. Ces exemples ne sont donc aucunement limitatifs.

La figure 21 représente un mode de réalisation secondaire où la sonde (6) est à l'intérieur de l'aimant (1) cylindrique et creux formant une bague. Il peut en effet être intéressant de permettre le placement de la sonde (6) de cette façon lorsque les dimensions du système recevant le capteur le nécessitent.

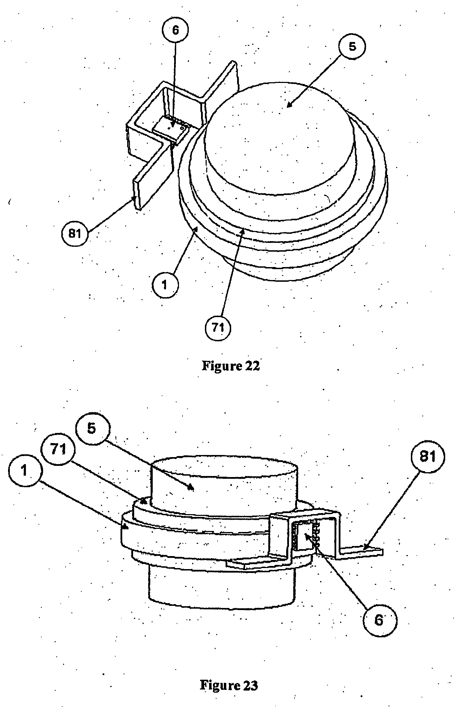

Les figures 22 et 23 montrent le capteur décrit par l'invention associé à un blindage (81) de champ magnétique extérieur. En effet, il peut être intéressant de garantir une insensibilité aux champs extérieurs lorsque le capteur est destiné à être utilisé dans un environnement pollué. Sur la figure 22, l'aimant (1) est monté sur une culasse ferromagnétique (71) elle-même montée sur un arbre 5. La sonde (6) est placée devant l'aimant (1) orientée afin de mesurer les composantes tangentielle et radiale du champ magnétique. Elle est entourée d'un blindage (81) fait d'une matière communément utilisée pour ce type de fonction comme des alliages à forte perméabilité magnétique, exemple non limitatif. La sonde (6) étant insensible aux champs magnétiques axiaux, le blindage (81) sera préférentiellement placé autour de la sonde (6) dans le plan de l'aimant. Sur la figure 23, on retrouve la même fonction de blindage associée au même capteur mais dont la sonde (6) est placée de telle sorte à mesurer les composantes tangentielle et axiale du champ magnétique. Dans ce mode de réalisation, et puisque la sonde (6) est insensible aux champs magnétiques radiaux, le blindage (81) sera préférentiellement placé autour de la sonde dans le plan tangent à l'aimant (1). Ainsi placé le blindage (81) permet de garantir une insensibilité aux champs magnétiques extérieurs durant la mesure. Ce blindage (81) est, dans les figures 22 et 23, sous la forme d'une fine tôle pliée d'encombrement réduit.

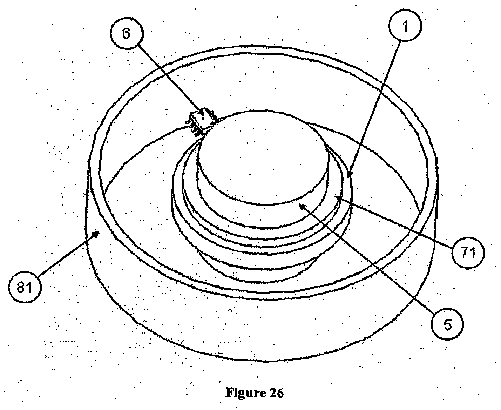

Ce blindage (81) présenté en figures 22 et 23 est une solution avantageuse, permettant un encombrement minimum, mais nullement limitatif. Tous les moyens de blindage connus de l'homme de métier peuvent bien sûr être intégrés au capteur de position. Ainsi en figure 26, le blindage (81) est représenté par un anneau entourant complètement l'ensemble aimant (1) + sonde (6).

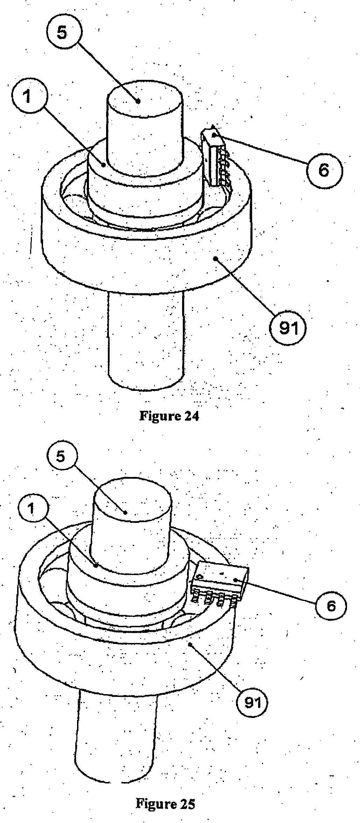

Le capteur suivant l'invention étant particulièrement bien destiné, de façon non limitative, aux applications comportant un arbre traversant, il peut être envisagé de placer le capteur au voisinage direct d'un roulement, par exemple un roulement à billes. Les figures 24 et 25 montrent deux modes de réalisation du capteur décrit par l'invention associé à un roulement à billes (91). La sonde (6) de la figure 24 est sensible aux champs tangentiel et axial alors que la sonde (6) de la figure 25 est sensible aux champs tangentiel et radial. Dans les deux cas, le roulement à billes (91) est placé à proximité du capteur afin de réaliser un ensemble compact. Idéalement, l'aimant (1) et les dimensions du capteur, ainsi que la position des éléments sensibles doivent être choisis en fonction des dimensions du roulement (91) et de l'encombrement total de l'ensemble capteur et roulement (91).

## Revendications

1. Capteur de position angulaire comportant un élément mobile constitué d'au moins un aimant permanent sensiblement cylindrique (1) tournant autour de son axe, au moins deux éléments magnétosensibles (2, 3) et au moins un circuit de traitement (4) délivrant un signal fonction de la position absolue de l'élément mobile, lesdits éléments magnétosensibles (2,3) étant localisés au même point et mesurant la composante tangentielle du champ magnétique et la composante radiale et/ou axiale du champ magnétique pour fournir 2 signaux sinusoïdaux sensiblement déphasés de 90°, ledit capteur comportant des moyens de compensation de la courbure des lignes de champ à l'intérieur de l'aimant (1), le capteur étant traversé par l'arbre d'un système pour la mesure de la position angulaire dudit système, **caractérisé en ce que** ledit aimant est un aimant bague isotrope aimanté diamétralement présentant une forme elliptique non circulaire, pour compenser ladite courbure des lignes de champs à l'intérieur de l'aimant constituant lesdits moyens de compensation de la courbure des lignes de champ à l'intérieur de l'aimant (1)

2. Capteur de position magnétique selon la revendication précédente, **caractérisé en ce qu'**il comporte au moins un élément de concentration de flux magnétique et deux paires d'éléments magnétosensibles dont les axes de sensibilité sont parallèles, lesdits éléments étant placés au voisinage de la périphérie d'une culasse perpendiculaire aux dits axes de sensibilité parallèles, deux desdits éléments mesurant la composante radiale et/ou axiale du champ magnétique et deux autres desdits éléments mesurant la composante tangentielle du champ magnétique.

3. Capteur de position magnétique selon la revendication 1, **caractérisé en ce que** le circuit de traitement du signal (4) réalise un calcul d'arctangente en utilisant deux signaux électriques provenant d'au moins deux des éléments magnétosensibles.

4. Capteur de position magnétique selon la revendication 1, **caractérisé en ce que** le circuit de traitement du signal (4) permette un ajustement des gains des deux signaux utiles au décodage de l'angle.

5. Capteur de position magnétique selon la revendication 1, **caractérisé, en ce que** la mesure du champ, l'ajustement des gains et le calcul du décodage de l'arctangente soient intégrés dans un seul et même boîtier.

6. Capteur de position magnétique selon la revendication 1, **caractérisé en ce que** les éléments magnétosensibles sont localisés sensiblement dans le plan médian de l'aimant.

7. Capteur de position magnétique selon la revendication 1, **caractérisé en ce que** l'aimant permanent (1) est collé sur un arbre tournant dont la position est à mesurer.

8. Capteur de position magnétique selon la revendication 1, **caractérisé, en ce que** l'aimant permanent (1) est collé sur une culasse ferromagnétique.

9. Capteur de position angulaire selon la revendication 1, **caractérisé en ce qu'**il comporte une sonde mesurant les composantes radiale et tangentielle de l'induction magnétique générée par l'aimant.

10. Capteur de position angulaire selon la revendication 1, **caractérisé, en ce que** la course est inférieure ou égale à 360°.

11. Capteur de position angulaire selon la revendication 1, **caractérisé, en ce qu'**il est, associé à un réducteur de mouvement et **en ce que** l'aimant est solidaire de la sortie du réducteur.

**Patentansprüche**

1. Winkelpositionssensor bestehend aus einem beweglichen Element, das mindestens einen im Wesentlichen zylindrischen Dauermagneten (1) umfasst, welcher sich um eine Achse dreht, mindestens zwei magnetempfindliche Elemente (2, 3) und mindestens eine Verarbeitungsschaltung (4), welche ein Signal entsprechend der absoluten Position des beweglichen Elements aussendet, wobei sich die magnetempfindlichen Elemente (2, 3) an der gleichen Stelle befinden und die Tangentialkomponente des Magnetfeldes und die Radialkomponente und/oder Axialkomponente des Magnetfeldes messen, um zwei im Wesentlichen um 90° phasenverschobene Sinussignale zu liefern, wobei der Sensor Mittel zum Ausgleich der Feldlinienkrümmung im Innern des Magneten (1) aufweist und durch den Sensor die Welle eines Systems zur Messung der Winkelposition des besagten Systems führt, **dadurch gekennzeichnet, dass** besagter Magnet ein isotroper, diametral magnetisierter Magnetring mit elliptischer, nicht kreisförmiger Form ist, um besagte Krümmung der Feldlinien im Innern des Magneten auszugleichen und somit besagte Mittel zum Ausgleich der Krümmung der Feldlinien im Innern des Magneten (1) bildet.

2. Magnetischer Positionssensor nach dem vorhergehenden Anspruch, **dadurch gekennzeichnet, dass** er mindestens ein Element zur Konzentration des Magnetstroms und zwei paare magnetempfindliche Elemente mit im Wesentlichen parallelen Achsen aufweist, wobei besagte Elemente neben dem Rand einer senkrecht zu den im Wesentlichen parallelen Achsen verlaufenden Joche angeordnet sind, wobei zwei der besagten Elemente die Radialkomponente und/oder die Axialkomponente des Magnetfeldes und zwei andere der besagten Elemente die Tangentialkomponente des Magnetfeldes messen.

3. Magnetischer Positionssensor gemäß Anspruch 1, **dadurch gekennzeichnet, dass** die Signalverarbeitungsschaltung (4) eine Arcustangens-Berechnung mit zwei elektrischen Signalen aus mindestens zwei der magnetempfindlichen Elemente anstellt.

4. Magnetischer Positionssensor nach Anspruch 1, **dadurch gekennzeichnet, dass** die Signalverarbeitungsschaltung (4) Angleichung der Verstärkung der beiden Signale die zur Dekodierung des Winkels dienende ermöglicht.

5. Magnetischer Positionssensor nach Anspruch 1, **dadurch gekennzeichnet, dass** die Messung des Feldes, die Angleichung der Verstärkung und die Berechnung der Dekodierung des Arcustangens in ein einziges Bauteil integriert sind.

6. Magnetischer Positionssensor nach Anspruch 1, **dadurch gekennzeichnet, dass** sich die magnetempfindlichen Elemente im Wesentlichen auf der Mittelebene des Magneten befinden.

7. Magnetischer Positionssensor nach Anspruch 1, **dadurch gekennzeichnet, dass** der Dauermagnet (1) auf eine Drehwelle geklebt wird, deren Position zu messen ist.

8. Magnetischer Positionssensor nach Anspruch 1, **dadurch gekennzeichnet, dass** der Dauermagnet (1) auf ein ferromagnetisches Joch geklebt ist.

9. Winkelpositionssensor nach Anspruch 1, **dadurch gekennzeichnet, dass** er eine Sonde umfasst, welche die Radial- und die Tangentialkomponente der durch den Magneten generierten magnetischen Induktion misst.

10. Winkelpositionssensor nach Anspruch 1, **dadurch gekennzeichnet, dass** der Weg kleiner/gleich 360° ist.

11. Winkelpositionssensor nach Anspruch 1, **dadurch gekennzeichnet, dass** er an ein Bewegungsgetriebe gekoppelt ist und dadurch, dass der Magnet mit dem Ausgang des Getriebes fest verbunden ist.

**Claims**

1. An angular position sensor comprising a movable element consisting of at least one substantially cylindrical permanent magnet (1) turning about its axis, at least two magnetosensitive elements (2, 3) and at least one processing circuit (4) delivering a signal that is dependent on the absolute position of the movable element, said magnetosensitive elements (2, 3) being located at the same points and measuring the tangential component of the magnetic field and the radial and/or axial component of the magnetic field in order to supply two sinusoidal signals out of phase by approximately 90°, said sensor comprising means for compensating for the curvature of the field lines inside the magnet (1), the sensor having the shaft of a system passing through it for measuring the angular position of said system, **characterised in that** said magnet is a diametrically magnetised isotropic ring magnet having a non-circular elliptical shape, for compensating for said curvature of the field lines inside the magnet constituting said means for compensating for the curvature of the field lines inside the magnet (1).

2. A magnetic position sensor according to the preceding claim, **characterised in that** it comprises at least one magnetic-flux concentration element and two pairs of magnetosensitive elements, the sensitivity axes of which are parallel, said elements being placed in the vicinity of the periphery of a yoke perpendicular to said parallel sensitivity axes, two of said elements measuring the radial and/or axial component of the magnetic field and another two of said elements measuring the tangential component of the magnetic field.

3. A magnetic position sensor according to claim 1, **characterised in that** the circuit (4) processing the signal carries out an arctangent calculation using two electrical signals coming from at least two of the magneto-sensitive elements.

4. A magnetic position sensor according to claim 1, **characterised in that** the circuit (4) for processing the signal provides an adjustment of the gains of the two signals useful to the decoding of the angle.

5. A magnetic position sensor according to claim 1, **characterised in that** the measurement of the field, the adjustment of the gains and the calculation of the decoding of the arc tangent are integrated in a single housing.

6. A magnetic position sensor according to claim 1, **characterised in that** the magnetosensitive elements are located approximately in the mid-plane of the magnet.

7. A magnetic position sensor according to claim 1, **characterised in that** the permanent magnet (1) is bonded on a rotating shaft, the position of which is to be measured.

8. A magnetic position sensor according to claim 1, **characterised in that** the permanent magnet (1) is bonded on a ferromagnetic yoke.

9. An angular position sensor according to claim 1, **characterised in that** it comprises a probe measuring the radial and tangential components of the magnetic induction generated by the magnet.

10. An angular position sensor according to claim 1, **characterised in that** the travel is less than or equal to 360°.

11. An angular position sensor according to claim 1, **characterised in that** it is associated with a movement reducer and **in that** the magnet is secured to the output of the reducer.

Figure 1

Figure 2

Figure 3

Figure 4

**Figure 5**

**Figure 6**

**Figure 7**

**Figure 8**

Figure 9

Figure 10

angle ■ Composante radiale ◆ Composante tangentielle ▲ Non Linéarité ____

**Figure 11**

Signal Non linéarité

**Figure 12**

Figure 13

Figure 14

Figure 15

Figure 16

Figure 17

Figure 18

Figure 19

**Figure 20**

**Figure 21**

Figure 22

Figure 23

Figure 24

Figure 25

Figure 26

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1014039 A
- EP 1083406 A
- EP 1182461 A
- EP 1571424 A
- US 06316935 B
- JP S58162813 B